# EUROPÄISCHE PATENTANMELDUNG

(11) **EP 0 581 735 A1**
(43) Veröffentlichungstag der Anmeldung: **02.02.1994**
(21) Anmeldenummer: 93810514.5
(22) Anmeldetag: 19.07.1993
(51) Int. Cl.: B01D 46/42, B01D 46/02

(54) **Stützrahmen zur Aufnahme von Filtertaschen in Luftfiltereinheiten**

(30) Priorität: 07.05.1993 CH 1409/93; 28.07.1992 CH 2367/92
(71) Anmelder: ZENTECO AG, CH-5430 Wettingen (CH)
(72) Erfinder: Ernst, Theodor, CH-5430 Wettingen (CH)
(74) Vertreter: Bosshard, Ernst

(57) **Zusammenfassung**

Ein zur Aufnahme einer Filtertasche dienender Stützrahmen hat die Form eines einstückigen Kragens (1). Dieser besteht aus vliesartiger, entwässerter Zellstoff-Pulpe. Die Aussenwand (6) jeder Kragenseite bildet zusammen mit je einem Innenschenkel (7) einen V-förmigen Spalt (5), in den die Filtertasche (2) eingreift. Im Eckbereich ist je ein keilförmiger Spickel (9) vorhanden. Durch Eindrücken dieser Spickel (9) in Richtung des Pfeiles A werden die Schenkel (7) gegen die Aussenwände (6) des Kragens angeklappt und dadurch die Filtermatte festhalten und durch Klebstoff fixiert.

Der Kragen (1) samt Filtertaschen lassen sich als Ganzes ungetrennt entsorgen, insbesondere verbrennen.

## Beschreibung

Die Erfindung bezieht sich auf einen Stützrahmen zur Aufnahme von Filtertaschen in Luftfiltereinheiten.

Ferner bezieht sich die Erfindung auf ein Verfahren zur Herstellung frontseitiger Stützrahmen zur Aufnahme von Filtertaschen.

Es sind gewerbliche Luftfilter mit Filtertaschen bekannt, bei denen Filtertaschen in frontseitige Einbaurahmen oder Kopfplatten aus Metall oder Kunststoff eingebaut sind. Derartige Filtertaschen können gruppenweise zu ganzen Filtereinheiten zusammengebaut werden. Bei dieser Filterart werden die einzelnen Filtertaschen durch Stützrahmen aus Metall oder Kunststoff abgestützt und dienen zudem zur Verstärku ng und Formgebung der Filtertaschen.

Nachteilig ist jedoch, dass zur Entsorgung von gesättigten, also mit Staub oder Schmutzpartikeln beladenen Filtertaschen diese mühsam von den üblicherweise metallischen oder aus Kunststoff bestehenden Stützorganen getrennt werden müssen, da die Annahmestellen von Abfallverbrennungsanlagen in zunehmendem Masse nur noch vollständig verbrennbare Luftfilter ohne wiederverwertbare Wertstoffe zur Verbrennung annehmen.

Mit der Erfindung soll die Aufgabe gelöst werden, die frontseitigen Stützrahmen der einzelnen Filtertaschen möglichst preisgünstig aus leichtem, brennbarem, preisgünstigem Material herzustellen, damit diese Stützrahmen samt Filtertaschen unter Vermeidung einer Separierung als Ganzes verbrannt werden können.

Die Erfindung, mit der diese Aufgabe gelöst wird, ist dadurch gekennzeichnet, dass der als einstückiger, rechteckiger Kragen ausgebildete Stützrahmen aus Faserguss besteht, die Kragen-Aussenwände vor dem Einsetzen des Filtermediums zusammen mit je einem Innenschenkel einen im Querschnitt V-förmigen Spalt bilden, die Kragenecken mit den Innenschenkeln über Faltkanten durch je einen keilförmigen Spickel verbunden sind, die zum Schliessen des V-förmigen Spaltes und Festhalten des Filtermediums gegen die Aussenwände anklappbar sind.

Das erfindungsgemässe Verfahren ist dadurch gekennzeichnet, dass der Stützrahmen als einstückiger Kragen aus Faserguss hergestellt wird, wobei die Kragen-Aussen- und Innenschenkel einen V-förmigen Spalt bilden, zwischen denen nach dem Schliessen des Spaltes die Filtertaschen-Ränder aufgenommen werden.

Da die als Kragen ausgebildeten Stützrahmen aus Faserguss bestehen, lassen sie sich als Massenartikel in einem Stück aus relativ billiger Zellstoff-Pulpe, beispielsweise unter Verwendung von Altpapier, herstellen. Die Kragen samt Filtertasche können nach der Sättigung mit Filterstaub als Ganzes verbrannt werden. Die Ausbildung des Kragens in Form einer einstückigen Materialbahn mit einklappbaren Kragenspickeln ergibt zudem eine hohe Abdichtsicherheit im Krageneckbereich.

Zur Verbesserung der Formstabilität des Kragen-Rohlings im weichen Zustand kann der Kragen mit abtrennbaren Versteifungsorganen versehen werden, die ihm eine für den vorgesehenen Anwendungszweck ausreichende Formstabilität und Masshaltigkeit geben.

In der Zeichnung sind Ausführungsbeispiele der Erfindung dargestellt. Es zeigen:
Fig. 1 eine Ansicht eines zusamengebauten Luftfilters mit einem Frontrahmen und mit mehreren von Stützrahmen gehaltenen Filtertaschen
Fig. 2 einen Längsschnitt durch einen mit einer Filtertasche zu verbindenden Kragen vor dem Einsetzen der Filtermatte
Fig. 3 eine Frontansicht des Kragens
Fig. 4 einen Schnitt durch den Eckbereich des Kragens mit Spickel
Fig. 5 einen Querschnitt durch eine Kragenseite mit eingesetzter Filtermatte, vor dem Einklappen der Spickel
Fig. 6 einen zu Fig. 5 analogen Querschnitt durch eine Kragenseite nach dem Einklappen der Spickel
Fig. 7 eine perspektivische Teilansicht eines Kragen-Rohlings vor dem Abtrennen von Versteifungsorganen
Fig. 8 einen Schnitt durch eine Ausführungsform des Kragenprofils

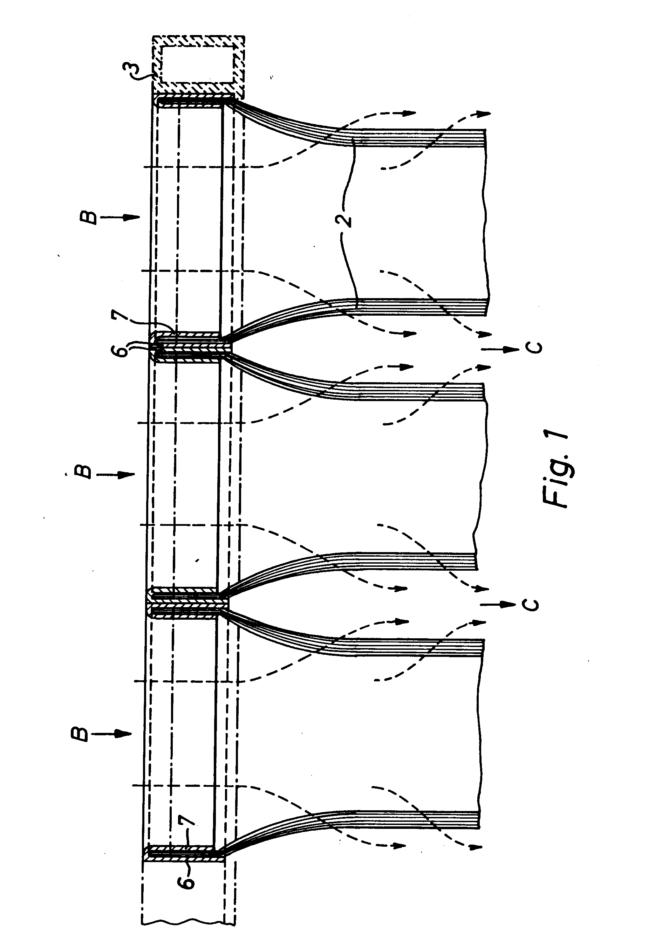

Das Filtermedium hat im vorliegenden Fall die Form einer sackartigen, unten geschlossenen Filtertasche und wird öffnungsseitig von einem rechteckigen Stützrahmen gehalten. Der Stützrahmen ist als Kragen 1 ausgebildet. Eine Mehrzahl derartiger Filtertaschen 2 samt Kragen 1 werden zu einem Filterpaket nebeneinander angeordnet und aussen von einem Frontrahmen 3 umgeben. Dabei strömt das zu reinigende Gas bzw. Luft gemäss Fig. 1 je von der Frontseite des Rahmens 3 in Richtung der Pfeile B in die Filtertaschen, durchdringt diese und verlässt die Luftfiltereinheit in gereinigter Form in Richtung der Pfeile C. Die Filterrückstände verbleiben im Innern der Filtertaschen.

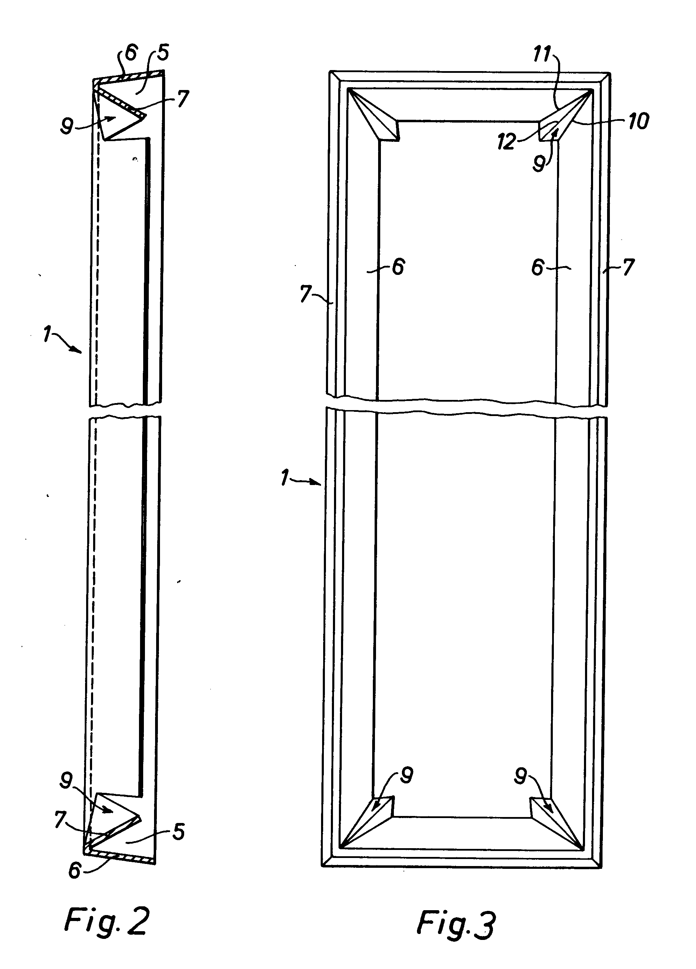

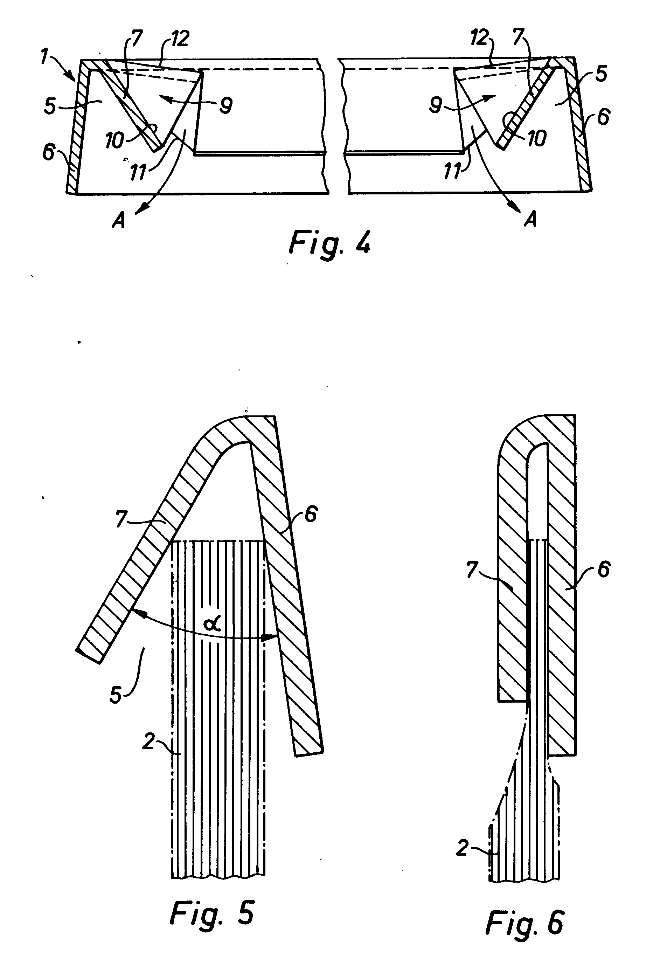

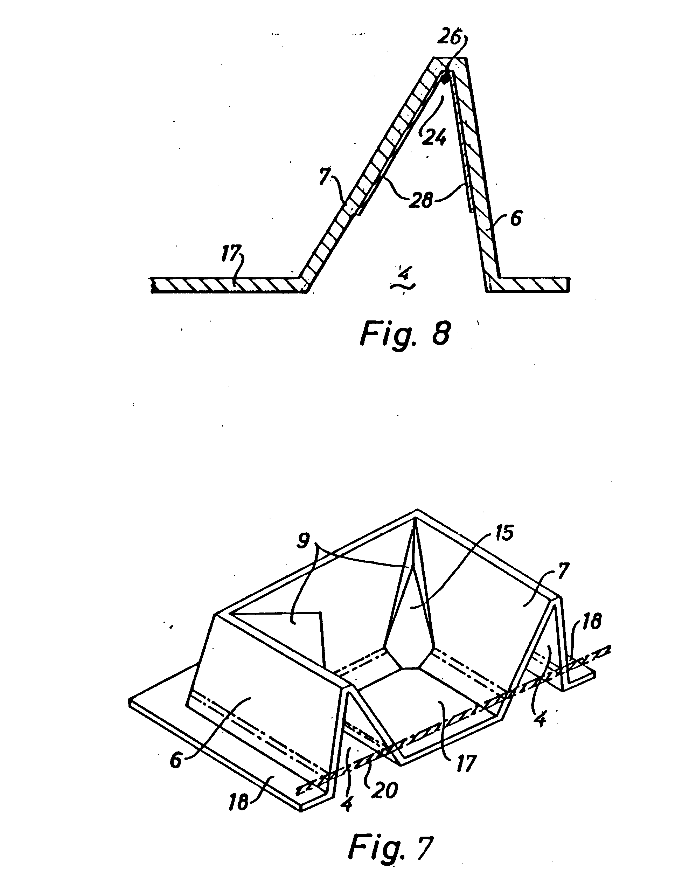

Der Kragen 1 besteht aus einem Faserguss, vorzugsweise in Form einer entwässerten und getrockneten, vliesartigen Zellstoff-Pulpe, die aus einem wässrigen Brei, beispielsweise aus Holzschliff und/oder Altpapier allenfalls mit Zuschlagstoffen gewonnen wird. Dieser Kragen 1 bildet ein einziges rechteckiges Formstück, einschliesslich den Spickeln 9 an den Ecken. Vor dem Einsetzen der Filtertasche 2 bildet die leicht nach aussen geneigte rechteckige Aussenwand 6 des Kragens 1 zusammen mit den sich auf der Rahmeninnenseite befindlichen Innenschenkeln 7 einen spitzen Winkel a von 25 - 50°, vorzugsweise etwa 38° und zwar auf allen vier Seiten. An den Ecken wird je ein keilförmiger im Querschnitt dreieckförmiger Spickel 9 gebildet, welche in den Krageninnenraum hineinragen, wie dies aus Fig. 4 hervorgeht. Die Oeffnungen dieser Spickel 9 erstrekken sich vor der Befestigung der Filtertasche 2 nach unten und bilden mit den Innenschenkeln 7 des Kragens an allen vier Ecken eine ununterbrochene Materialbahn. Jeder dieser Spickel 9 weist drei im Dreieck angeordnete Faltkanten 10, 11, 12 auf, die vorzugsweise eine etwas geringere Materialstärke haben, als dem übrigen Materialquerschnitt entspricht oder anderweitig geschwächt sind. Diese Spickel 9 können auch mit einerAusnehmung 15 an dem von der Spitze entfernten Bereich versehen werden, deren Form aus der Fig. 2 und 7 ersichtlich ist.

Zur Befestigung der Filtertasche 2 am Kragen 1 wird diese vorerst ringsherum in den im Querschnitt V-förmigen, sich nach dem Krageninnern öffnenden Spalt 5 des Kragens eingesetzt, wie dies aus Fig. 5 hervorgeht. Sodann werden-die Spickel 9 an allen vier Ecken in Richtung des Pfeiles A eingedrückt, wordurch sich der V-Spalt 5 schliesst und die Filtertasche 2 je zwischen derAussenwand 6 und dem Innenschenkel 7 eingeklemmt wird, die dies aus Fig. 6 hervorgeht. Bis zur Ueberwindung des Totpunktes findet am Spickel 9 und teilweise am Kragen 1 eine leichte elastische und zurückfedernde Deformation statt. In der eingedrückten Endlage der Spickel 9 verlaufen die Schenkel 7 angenähert parallel zur Aussenwand 6. Auch die Spickelwände nehmen je angenähert die Position der benachbarten Aussenwände 6 ein, d.h. jeder Spickel 9 bildet eine etwa im rechten Winkel verlaufende Fortsetzung der Schenkel 7.

Da somit im Eckbereich eine ununterbrochene Fortsetzung des Innenschenkels 7 über die nach innen geklappten Spickel besteht, ergibt sich eine durchgehende gute Abdichtung, sodass kein ungefiltertes Gas bzw. Luft den Filter oder den Kragen durchdringen kann. Die Filtertasche 2 wird mit dem Kragen 1 und mit dem Rahmen 3 vorzugsweise verklebt oder anderweitig verbunden.

Da der Kragen 1 im Rohzustand unmittelbar nach der Entformung noch weich und wenig stabil ist, ist er mit Versteifungsorganen 17, 18 versehen. Wie aus Fig. 7 hervorgeht, sind die Innenschenkel 7 zur Versteifung durch eine durchgehende Wand 17 untereinander verbunden. Zudem sind die Aussenschenkel 6 zur weiteren Versteifung je mit einem nach aussen abstehenden Rand 18 versehen, der sich vorzugsweise etwa in der gleichen Ebene wie die Wand 17 befindet. Nach dem Trocknen und damit Erhärten des Faserguss-Materials und vor der Befestigung der Filtertaschen 2 wird die Wand 17 und die Ränder 18 abgetrennt, beispielsweise durch Abfräsen. Der Schnitt erfolgt entlang einer in Fig. 7 angedeuteten Trennlinie 20. Der dabei entstehende Abfall kann recycliert, d.h. wieder in den Produktionsprozess zur Herstellung weiterer Krägen rückgeführt werden.

Zur zusätzlichen Versteifung und Stabilisierung des Kragens 1 kann gemäss Fig. 8 auf der Spitzeninnenseite 24 des keilförmigen Spaltes 4 ein durchgehendes, in sich geschlossenes, längliches Verstärkungsorgan in Form einer Schnur 26, einer Kunststoff-Saite oder eines Drahtes eingeklebt werden, welche eine Verbesserung der Zugfestigkeit des Kragens 1 ergibt, namentlich wenn der Kragen im Betrieb feucht werden sollte.

Ferner kann vor dem Einsetzen der Filtertasche 2 auf die Innenseiten des keilförmigen Spaltes 4 eine Klebstoffschicht 28 aufgetragen werden, vorzugsweise in Form eines Heissklebers. Zur Fixierung der Filtertasche 2 werden die Aussen- und Innenschenkel 6, 7 gegeneinander angeklappt und die Klebstoffschicht 28 durch Erwärmung aktiviert.

Derartige Taschen-Luftfilter können nach der Sättigung der Filtertaschen 2 mit Staubpartikeln od.dgl. ohne Trennung der Filtertasche 2 vom Kragen 1 als Ganzes entsorgt werden. Falls auch der äussere viereckige Frontrahmen 3 aus gleichem oder einem ähnlichen, brennbaren Material besteht, beispielsweise aus Pappe oder Recycling-Karton, kann eine solche Luftfiltereinheit als Ganzes ungetrennt entsorgt, insbesondere verbrannt werden.

## Patentansprüche

1. Stützrahmen zur Aufnahme von Filtertaschen in Filteranlagen, dadurch gekennzeichnet, dass als einstückiger, rechteckiger Kragen (1) ausgebildete Stützrahmen aus Faserguss besteht, die Kragen-Aussenwände (6) vor dem Einsetzen des Filtermediums (2) zusammen mit je einem Innenschenkel (7) einen im Querschnitt V-förmigen Spalt (5) bilden, die Kragenecken mit den Innenschenkeln (7) über Faltkanten (10, 11, 12) durch je einen keilförmigen Spickel (9) verbunden sind, die zum Schliessen des V-förmigen Spaltes (5) und Festhalten des Filtermediums (2) gegen die Aussenwände (6) anklappbar sind.

2. Stützrahmen nach Anspruch 1 oder 2, dadurch gekennzeichnet, dass der V-förmige Spalt (5) einen Oeffnungswinkel a von 25 - 50°, vorzugsweise etwa 38° hat.

3. Stützrahmen nach den Ansprüchen 1 oder 2, dadurch gekennzeichnet, dass der Kragen-Rohling mit mindestens einem abtrennbaren Versteifungsorgan (17, 18) versehen ist.

4. Stützrahmen nach einem derAnsprüche 1 - 3, dadurch gekennzeichnet, dass die Versteifungsorgane eine die Kragen-Innenschenkel (7) verbindende Wand (17) und von den Kragen-Aussenschenkeln (6) abragende Ränder (18) aufweisen, wobei die Wand (17) und die Ränder sich mindestens angenähert in der gleichen Ebene befinden.

5. Stützrahmen nach einem der Ansprüche 1 - 4, dadurch gekennzeichnet, dass ein in sich geschlossenes, an der Innenseite der Spaltspitze (24) angeordnetes, längliches Verstärkungsorgan (26), insbesondere eine Schnur oder Draht eingeklebt ist.

6. Stützrahmen nach einem der Ansprüche 1 - 5, dadurch gekennzeichnet, dass der V-förmige Spalt (4) innen eine Klebstoffschicht, insbesondere in Form eines Heissklebers aufweist.

7. Verfahren zur Herstellung frontseitiger Stützrahmen zur Aufnahme von Filtertaschen, dadurch gekennzeichnet, dass der Stützrahmen als einstückiger Kragen (1) aus Faserguss hergestellt wird, wobei die Kragen-Aussen- und Innenschenkel (6, 7) einen V-förmigen Spalt (4) bilden, zwischen denen nach dem Schliessen des Spaltes (4) die Filtertaschen-Ränder (8) aufgenommen werden.

8. Verfahren nach Anspruch 7, dadurch gekennzeichnet, dass mindestens die Kragen-Innenschenkel (7) des Kragen-Rohlingsje mit einem Versteifungsorgan (17) versehen werden, welches nach dem Aushärten des Fasergussmaterials abgetrennt wird.

9. Verfahren nach den Ansprüchen 7 oder 8, dadurch gekennzeichnet, dass das Fasergussmaterial aus Zellstoff-Pulpe mit einem Anteil von Altpapier besteht.
